# FASCICULE DE BREVET EUROPEEN

(11) **EP 3 084 148 B1**
(45) Date de publication et mention de la délivrance du brevet: **04.04.2018**
(21) Numéro de dépôt: 14830814.1
(22) Date de dépôt: 17.12.2014
(51) Int. Cl.: F01K 7/22, F01K 7/38

(54) **PROCÉDÉ ET APPAREIL DE GÉNÉRATION D'ÉLECTRICITÉ UTILISANT UNE CENTRALE THERMIQUE**
VERFAHREN UND VORRICHTUNG ZUR STROMERZEUGUNG MITTELS EINES THERMISCHEN KRAFTWERKS
METHOD AND APPARATUS FOR GENERATING ELECTRICITY USING A THERMAL POWER PLANT

(30) Priorité: 20.12.2013 FR 1363248
(43) Date de publication de la demande: 26.10.2016
(73) Titulaire: L'Air Liquide Société Anonyme pour l'Etude et l'Exploitation des Procédés Georges Claude, 75007 Paris (FR)
(72) Inventeur: DAVIDIAN, Benoît, F-94100 Saint Maur Des Fosses (FR); PAUFIQUE, Cyrille, F-69002 Lyon (FR)
(74) Mandataire: Mercey, Fiona Susan
(86) Numéro de dépôt international: PCT/FR2014/053391
(87) Numéro de publication internationale: WO 2015/092276

(56) Documents cités:
- JP-A- S5 647 625
- JP-A- S59 180 012
- US-A- 4 329 842
- US-A1- 2009 100 845
- US-A1- 2012 151 961

## Description

La présente invention est relative à un procédé et appareil de génération d'électricité utilisant une centrale thermique. L'invention peut également concerner un procédé de génération d'électricité permettant également de stocker de l'énergie par liquéfaction de gaz. L'invention concerne également des appareils pour mettre en oeuvre ces procédés.

Un premier but de l'invention est de générer l'électricité avec plus d'efficacité.

Un deuxième but de l'invention est de réduire les coûts de stockage d'énergie d'un procédé de génération d'électricité utilisant une centrale en y intégrant un stockage d'énergie électrique par gaz liquéfié.

Dans une centrale thermique, les fumées chaudes générées par une combustion de combustible (charbon, gaz naturel, fioul etc) chauffent de l'eau ou de la vapeur d'eau pour former de la vapeur d'eau destinée à une turbine à vapeur, qui génère l'électricité. C'est aussi le cas dans un cycle combiné où les gaz de combustion détendus dans la turbine à gaz et encore chauds servent à chauffer de l'eau ou de la vapeur d'eau pour former de la vapeur d'eau destinée à une turbine à vapeur, qui génère l'électricité. Il est surprenant de constater que la génération de l'électricité est plus efficace quand une partie de la chaleur générée par la centrale est utilisée non pas dans la turbine à vapeur de la centrale mais pour préchauffer un gaz destiné à une turbine.

Selon l'invention, on utilise de la chaleur thermique noble (et non résiduaire) qui sert normalement à faire l'électricité de la centrale et en plus, au moment, où on doit fournir le réseau en électricité. On utilise le meilleur rendement du cycle air (ou gaz de l'air) vaporisé par rapport au cycle vapeur de la turbine à vapeur de la centrale, pour fournir plus d'énergie au réseau.

En périodes de basse consommation d'électricité, il est parfois nécessaire de stocker l'énergie thermique générée par la centrale. Les stockages thermiques requis pour ce faire sont volumineux, coûteux et relativement difficile à mettre en oeuvre.

La présente invention propose d'éliminer ou de réduire la taille de ces stockages en les remplaçant au moins partiellement par un système de liquéfaction d'air ou de gaz de l'air.

US-A-2012151961 décrit un procédé de stockage d'air liquéfié. Pendant les phases où la demande électrique est faible, de l'air est liquéfié et stocké. Pendant les phases où la demande électrique est forte, l'air liquide est vaporisé dans un système qui optimise la récupération de froid, pour générer un fluide sous pression, qui est turbiné pour obtenir de l'électricité. L'énergie obtenue est d'autant plus intéressante (et donc le rendement de stockage) que le fluide est chauffé avec de la chaleur résiduaire avant détente.

L'article «Des Solutions Cryogéniques pour le Stockage de l'Energie et l'Optimisation Energétique » dans la Revue Générale du Froid par Dubettier et al décrit le chauffage de l'air vaporisé en utilisant de la chaleur résiduaire ou au moyen de brûleurs de gaz naturel afin d'augmenter l'énergie produite en détendant l'air.

La solution décrite dans l'art antérieur est la suivante :
- en phase de faible demande :
   - D'utiliser l'énergie électrique pour produire l'air liquide
   - De stocker une partie de l'énergie thermique disponible pour un usage lors des fortes demandes, qui sera utilisée pour chauffer le gaz sous pression avant détente
- et en phase de forte demande :
   - Vaporiser le gaz liquéfié, en récupérant le froid, pour produire un gaz sous pression
   - Réchauffer le gaz sous pression grâce à l'énergie thermique stockée précédemment
   - Détendre le gaz pour produire de l'électricité

Au lieu de stocker de l'énergie thermique en phase de faible demande, on propose de soutirer une partie de l'énergie thermique produite par la centrale thermique en phase de forte demande : ceci réduit la production électrique de la centrale thermique, mais permet d'augmenter de façon importante l'énergie électrique produite par le fluide sous pression qui aura été chauffé par cette énergie thermique soutirée.

La performance énergétique est certes légèrement réduite dans ce cas, mais cela permet d'éviter l'investissement d'un stockage thermique qui s'avère de très grande taille et très couteux.

Un but de l'invention est de réduire le coût d'un appareil de génération d'électricité en évitant le besoin d'avoir des stockages.

JP-A-56047625 décrit un procédé selon le préambule de la revendication 1. JP-A-59180012 décrit l'usage de vapeur d'eau détendue dans une turbine pour préchauffer du gaz naturel produit par vaporisation d'un liquide sous pression et destiné à une turbine.

Selon un objet de l'invention, il est prévu un procédé selon la revendication 1. Selon d'autres aspects facultatifs :
- une première partie des fumées est utilisée pour chauffer de la vapeur envoyée à la première turbine pour être détendue et une deuxième partie des fumées préchauffe le gaz sous pression, le débit de la deuxième partie des fumées étant au plus 30% de la somme des première et deuxième parties..
- les fumées chauffent d'abord le gaz sous pression et ensuite sont utilisées pour chauffer de la vapeur envoyée à la première turbine pour y être détendue.
- les première et deuxième turbines ensemble produisent plus d'électricité qu'aurait produit la première turbine seule en utilisant toute la chaleur du fluide chauffé ou des fumées respectivement pour chauffer l'eau ou la vapeur d'eau destinée à la première turbine.
- l'électricité générée par la première et/ou la deuxième turbine est envoyé au réseau.
- le seul gaz détendu dans la deuxième turbine est le fluide sous pression.

Selon un autre objet de l'invention, il est prévu un procédé de génération d'électricité et de stockage d'énergie dans lequel :
i) pendant une première période, on opère tel que décrit ci-dessus
ii) pendant une deuxième période
   a) on produit de l'énergie thermique au moyen de la centrale thermique et on utilise l'énergie thermique pour générer de l'électricité
   b) on utilise de l'énergie électrique et/ou mécanique générée par la centrale pour liquéfier le gaz,
   c) on stocke le gaz liquéfié dans un stockage.

Selon d'autres objets facultatifs
- la deuxième période correspond à une période de plus faible demande en électricité et/ou de tarif d'électricité plus faible que la première période.
- pendant la deuxième période la première turbine génère de l'électricité qui sert à liquéfier le gaz.
- pendant la première période, on ne liquéfie pas le gaz.
- pendant la première période on ne vaporise pas le liquide stocké et/ou on ne détend pas le fluide sous pression dans la deuxième turbine.

Selon un autre objet de l'invention, il est prévu un appareil selon la revendication 12.

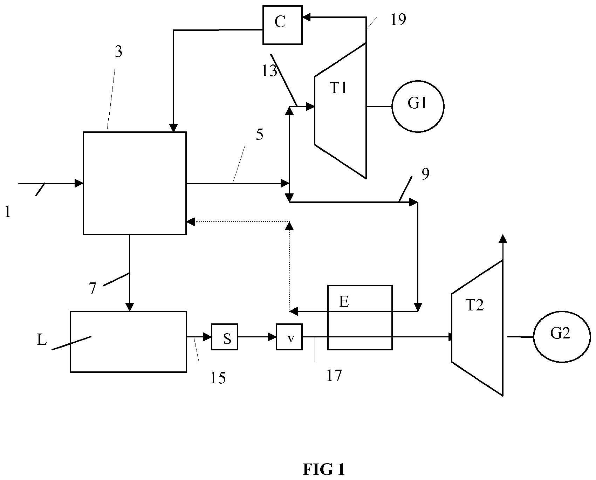

L'invention sera décrite de manière plus détaillée en se référant aux figures qui montrent un procédé selon l'invention. La Figure 1 montre de manière schématique et partielle un procédé similaire à celui selon l'invention.

Dans la Figure 1, pour mettre en oeuvre un procédé de génération d'électricité, on utilise une centrale thermique 3 ainsi qu'un appareil de vaporisation de liquide V.

On produit de l'énergie thermique au moyen de la centrale 3 thermique alimenté par un carburant 1, par exemple du charbon ou gaz naturel. Celle-ci produit des fumées dont au moins une partie est utilisée pour vaporiser de l'eau ou pour chauffer de la vapeur d'eau. Ainsi la centrale thermique produit de la vapeur d'eau 5.

Une partie 13 de la vapeur d'eau 5, constituant au moins 70% du débit 5, est détendue dans une première turbine T1, la vapeur détendue 19 étant ensuite généralement condensée dans un condenseur C, puis recyclée vers la centrale 3 et on utilise la première turbine pour entraîner un générateur d'électricité G1 afin de produire de l'électricité.

Le reste de la vapeur d'eau 9, constituant au plus 30% du débit 5, est utilisée pour chauffer un liquide cryogénique vaporisé 17, pouvant être par exemple de l'air ou de l'azote. Le liquide vaporisé 17 est chauffé par la vapeur d'eau dans l'échangeur E à une température supérieure à la température ambiante et envoyé à la deuxième turbine T2. On utilise la deuxième turbine pour entraîner un générateur d'électricité G2. Si la détente du liquide vaporisé 17 se fait en plusieurs étapes, le liquide vaporisé 17 peut être chauffé en amont de chaque étape.

Ceci représente la forme la plus simple de mise en oeuvre du procédé. Dans ce cas, l'air ou l'azote détendu dans la deuxième turbine T2 peut être mis à l'air. La vapeur d'eau 9 qui a chauffé le gaz 17 dans l'échangeur E peut être recyclée à la centrale 3, éventuellement après avoir été condensée dans un condenseur, qui peut être le même que celui après la turbine T1 (le condenseur C) ou mise à l'air.

La quantité d'électricité produite par les deux générateurs G1, G2 excède celle qui serait produite si toute la vapeur 5 était envoyée à la première turbine T1 et seul le générateur G1 fonctionnait.

Il est possible d'utiliser le procédé de manière plus intégrée en utilisant de l'énergie 7 mécanique ou électrique provenant de la centrale 3 pour faire fonctionner un appareil de liquéfaction L d'un gaz de l'air, par exemple l'air ou l'azote. Le gaz liquéfié stocké dans un stockage S et le liquide stocké est soutiré pour être vaporisé dans le vaporiseur V pour fournir le gaz à détendre dans la deuxième turbine T2.

Le gaz liquéfié peut être un gaz autre qu'un gaz de l'air, par exemple du gaz naturel, du dioxyde de carbone.

De préférence, lors d'une première période, l'appareil de liquéfaction L ne fonctionne pas et le liquide stocké est vaporisé, chauffé par la vapeur 9 et envoyé à la deuxième turbine T2. Cette période correspond à une période de plus forte demande en électricité et/ou de tarif d'électricité plus élevé. Seule la partie 13 de la vapeur est envoyée à la première turbine T1. La partie 13 constitue au moins 70% du débit 5.

Lors d'une deuxième période, qui est une période de plus faible demande en électricité et/ou de tarif d'électricité plus faible que la première période, toute la vapeur 5 est envoyée à la première turbine T1, comme débit 13, l'appareil de liquéfacteur reçoit de l'énergie 7 pour liquéfier le gaz et stocke le gaz liquéfié. Le vaporiseur V et la turbine T2 ne marchent pas. Aucune partie de la vapeur n'est envoyée à l'échangeur E.

Une variante du procédé qui constitue l'invention est d'utiliser une partie des fumées pour chauffer le gaz 17 dans l'échangeur E et le reste des fumées pour chauffer de la vapeur d'eau ou de l'eau pour faire de la vapeur à envoyer à la première turbine T1. La partie des fumées envoyée à l'échangeur E sera limitée à au plus 30% du débit total pour que la turbine T1 puisse continuer à fonctionner.

Au lieu de diviser la vapeur d'eau 5 en deux pour alimenter la turbine T1 et l'échangeur E, une autre possibilité serait de passer la vapeur d'eau 5 d'abord dans l'échangeur E et ensuite la détendre dans la première turbine T1.

Les fumées pourraient être envoyées d'abord à l'échangeur E pour chauffer le gaz 17 et ensuite servir à chauffer la vapeur d'eau destinée à la première turbine T1.

La vapeur d'eau 9 pour chauffer l'échangeur E peut provenir d'un inter-étage de la première turbine T1.

## Revendications

1. Procédé de génération d'électricité au moyen d'une centrale thermique (3) et un appareil de vaporisation de liquide (V) dans lequel :
a) on produit de l'énergie thermique au moyen de la centrale thermique, on produit des fumées (5), on utilise au moins une partie des fumées pour vaporiser de l'eau ou pour chauffer de la vapeur d'eau, on détend la vapeur d'eau formée dans une première turbine (T1) et on utilise la première turbine pour entraîner un générateur d'électricité (G1) afin de produire de l'électricité
b) on vaporise du gaz liquéfié (15) provenant d'un stockage cryogénique (S) pour produire un gaz sous pression (17)
c) on réchauffe le gaz sous pression et
d) on détend le fluide sous pression dans une deuxième turbine (T2) pour produire de l'électricité
e) pour réchauffer le fluide sous pression, on utilise une partie de l'énergie thermique produite dans l'étape a) pour réchauffer le fluide sous pression en utilisant une partie (9) des fumées de la centrale thermique
**caractérisé en ce que** on produit des fumées par combustion d'un combustible, on utilise une partie de la chaleur des fumées pour préchauffer le fluide destiné à la deuxième turbine (T2) et on utilise une autre partie de la chaleur des fumées pour chauffer de l'eau ou de la vapeur d'eau qui est envoyée se détendre dans la première turbine (T1) pour générer l'électricité.

2. Procédé selon la revendication 1 dans lequel une première partie des fumées est utilisée pour chauffer de la vapeur envoyée à la première turbine (T1) pour être détendue et une deuxième partie des fumées préchauffe le gaz sous pression (17), le débit de la deuxième partie des fumées étant au plus 30% de la somme des première et deuxième parties.

3. Procédé selon la revendication 1 dans lequel les fumées chauffent d'abord le gaz sous pression et ensuite sont utilisées pour chauffer de la vapeur envoyée à la première turbine (T1) pour y être détendue.

4. Procédé selon l'une des revendications précédentes dans lequel les première et deuxième turbines (T1,T2) ensemble produisent plus d'électricité qu'aurait produit la première turbine (T1) seule en utilisant toute la chaleur du fluide chauffé ou des fumées respectivement pour chauffer l'eau ou la vapeur d'eau destinée à la première turbine.

5. Procédé selon l'une des revendications précédentes dans lequel le seul gaz détendu dans la deuxième turbine (T2) est le fluide sous pression (17).

6. Procédé de génération d'électricité et de stockage d'énergie dans lequel :
i) pendant une première période, on opère selon l'une des revendications précédentes
ii) pendant une deuxième période
a) on produit de l'énergie thermique au moyen de la centrale thermique (3) et on utilise l'énergie thermique pour générer de l'électricité
b) on utilise de l'énergie électrique et/ou mécanique générée par la centrale pour liquéfier le gaz (7),
c) on stocke le gaz liquéfié (15) dans un stockage (S).

7. Procédé selon la revendication 6 dans lequel la deuxième période correspond à une période de plus faible demande en électricité et/ou de tarif d'électricité plus faible que la première période.

8. Procédé selon l'une des revendications 6 ou 7 dans lequel pendant la deuxième période la première turbine (T1) génère de l'électricité qui sert à liquéfier le gaz.

9. Procédé selon l'une des revendications 6, 7 ou 8 dans lequel pendant la première période, on ne liquéfie pas le gaz.

10. Procédé selon l'une des revendications 6 à 9 dans lequel pendant la première période on ne vaporise pas le liquide stocké (15).

11. Procédé selon l'une des revendications 6 à 10 dans lequel pendant la première période on ne détend pas le fluide sous pression dans la deuxième turbine (T2).

12. Appareil intégré de génération d'électricité comprenant une centrale thermique comprenant une première turbine (T1), qui est une turbine à vapeur d'eau, reliée à des moyens de génération d'électricité (G1), un appareil de liquéfaction d'un gaz et de vaporisation du gaz liquéfié (L,V) comprenant une deuxième turbine (T2), qui est une turbine de détente de gaz liquéfié vaporisé, reliée à des moyens de génération d'électricité (G2), des moyens de préchauffage (E) du gaz liquéfié vaporisé (17) en amont de la deuxième turbine **caractérisé en ce qu'**il comprend des moyens pour envoyer des fumées provenant de la centrale thermique aux moyens de préchauffage du gaz liquéfié vaporisé et des moyens pour transférer de l'énergie électrique ou mécanique de la centrale vers l'appareil de liquéfaction.

## Patentansprüche

1. Verfahren zur Stromgenerierung mittels eines Wärmekraftwerks (3) und einer Vorrichtung zum Verdampfen von Flüssigkeit (V), wobei:
a) Wärmeenergie mittels des Wärmekraftwerks erzeugt wird, Abgase (5) erzeugt werden, mindestens ein Teil der Abgase verwendet wird, um Wasser zu verdampfen oder um Wasserdampf zu erhitzen, der gebildete Wasserdampf in einer ersten Turbine (T1) entspannt wird und die erste Turbine verwendet wird, um einen Stromgenerator (G1) anzutreiben, um Strom zu erzeugen,
b) Flüssiggas (15), das aus einem Kryogenspeicher (S) stammt, verdampft wird, um ein Druckgas (17) zu erzeugen,
c) das Druckgas aufgeheizt wird, und
d) das Druckfluid in einer zweiten Turbine (T2) entspannt wird, um Strom zu erzeugen,
e) um das Druckfluid aufzuheizen ein Teil der im Schritt a) erzeugten Wärmeenergie verwendet wird, um das Druckfluid unter Verwendung eines Teils (9) der Abgase des Wärmekraftwerks aufzuheizen,
**dadurch gekennzeichnet, dass** Abgase durch Verbrennen eines Brennstoffs erzeugt werden, ein Teil der Wärme der Abgase verwendet wird, um das für die zweite Turbine (T2) bestimmte Fluid vorzuerwärmen, und ein weiterer Teil der Wärme der Abgase verwendet wird, um Wasser oder Wasserdampf zu erhitzen, der zum Entspannen in die erste Turbine (T1) geschickt wird, um Strom zu generieren.

2. Verfahren nach Anspruch 1, wobei ein erster Teil der Abgase verwendet wird, um Dampf zu erhitzen, der zur ersten Turbine (T1) geschickt wird, um entspannt zu werden, und ein zweiter Teil der Abgase das Druckgas (17) vorerhitzt, wobei der Durchsatz des zweiten Teils der Abgase höchstens 30 % der Summe des ersten und zweiten Teils beträgt.

3. Verfahren nach Anspruch 1, wobei die Abgase zunächst das Druckgas erhitzen und anschließend verwendet werden, um Dampf zu erhitzen, der zur ersten Turbine (T1) geschickt wird, um dort entspannt zu werden.

4. Verfahren nach einem der vorstehenden Ansprüche, wobei die erste und zweite Turbine (T1, T2) zusammen mehr Strom erzeugen, als die erste Turbine (T1) alleine erzeugt hätte unter Verwendung der gesamten Wärme des erhitzen Fluids bzw. der Abgase, um für die erste Turbine bestimmtes Wasser oder Wasserdampf zu erhitzen.

5. Verfahren nach einem der vorstehenden Ansprüche, wobei das einzige Gas, das in der zweiten Turbine (T2) entspannt wird, das Druckfluid (17) ist.

6. Verfahren zur Stromgenerierung und Energiespeicherung, wobei:
i) während eines ersten Zeitraums nach einem der vorstehenden Ansprüche verfahren wird,
ii) während eines zweiten Zeitraums
a) Wärmeenergie mittels des Wärmekraftwerks (3) erzeugt wird und die Wärmeenergie verwendet wird, um Strom zu generieren,
b) von dem Kraftwerk generierte elektrische und/oder mechanische Energie verwendet wird, um das Gas (7) zu verflüssigen,
c) das Flüssiggas (15) in einem Speicher (S) gespeichert wird.

7. Verfahren nach Anspruch 6, wobei der zweite Zeitraum einem Zeitraum von geringerer Stromnachfrage und/oder geringerem Stromtarif entspricht als der erste Zeitraum.

8. Verfahren nach einem der Ansprüche 6 oder 7, wobei während des zweiten Zeitraums die erste Turbine (T1) Strom generiert, der zum Verflüssigen des Gases dient.

9. Verfahren nach einem der Ansprüche 6, 7 oder 8, wobei während des ersten Zeitraums das Gas nicht verflüssigt wird.

10. Verfahren nach einem der Ansprüche 6 bis 9, wobei während des ersten Zeitraums die gespeicherte Flüssigkeit (15) nicht verdampft wird;

11. Verfahren nach einem der Ansprüche 6 bis 10, wobei während des ersten Zeitraums das Druckfluid nicht in der zweiten Turbine (T2) entspannt wird.

12. Integrierte Stromgenerierungsvorrichtung, die ein Wärmekraftwerk umfasst, umfassend eine erste Turbine (T1), die eine mit Stromgenerierungsmitteln (G1) verbundene Wasserdampfturbine ist, eine Vorrichtung zum Verflüssigen eines Gases und zum Verdampfen des Flüssiggases (L, V), umfassend eine zweite Turbine (T2), die eine mit Stromgenerierungsmitteln (G2) verbundene Entspannungsturbine von verdampftem Flüssiggas ist, 'Mittel zum Vorerhitzen (E) des verdampften Flüssiggases (17) stromaufwärts der zweiten Turbine, **dadurch gekennzeichnet, dass** sie Mittel umfasst, um Abgase, die aus dem Wärmekraftwerk stammen, zu den Mitteln zum Vorerhitzen des verdampften Flüssiggases zu schicken, und Mittel, um elektrische oder mechanische Energie von dem Kraftwerk zu der Verflüssigungsvorrichtung zu übertragen.

## Claims

1. Method for generating electricity via a thermal power plant (3) and an apparatus for vaporising liquid (V), wherein:
a) thermal energy is produced via the thermal power plant, flue gas (5) is produced, at least a portion of the flue gas is used to vaporise water or to heat water vapour, the water vapour formed is expanded in a first turbine (T1) and the first turbine is used to drive an electricity generator (G1) in order to produce electricity
b) liquefied gas (15) coming from a cryogenic storage (S) is vaporised in order to produce a pressurized gas (17)
c) the pressurized gas is heated and
d) the pressurized fluid is expanded in a second turbine (T2) in order to produce electricity
e) in order to heat the pressurized fluid, a portion of the thermal energy produced in step a) is used to heat the pressurized fluid by using a portion (9) of the flue gas of the thermal power plant
**characterised in that** flue gas is produced by combustion of a fuel, a portion of the heat of the flue gas is used to preheat the fluid intended for the second turbine (T2) and another portion of the heat of the flue gas is used to heat water or water vapour that is sent to be expanded in the first turbine (T1) in order to generate electricity.

2. Method according to claim 1, wherein a first portion of the flue gas is used to heat vapour send to the first turbine (T1) in order to be expanded and a second portion of the flue gas preheats the pressurized gas (17), the flow rate of the second portion of the flue gas being at most 30% of the sum of the first and second portions.

3. Method according to claim 1, wherein the flue gas first heats the pressurized gas and is then used to heat vapour sent to the first turbine (T1) in order to be expanded therein.

4. Method according to one of the previous claims, wherein the first and second turbines (T1, T2) together produce more electricity than the first turbine (T1) would have produced alone by using all of the heat of the heated fluid or of the flue gas, respectively, to heat the water or the water vapour intended for the first turbine.

5. Method according to one of the previous claims, wherein the only gas expanded in the second turbine (T2) is the pressurized fluid (17).

6. Method for generating electricity and storing energy, wherein:
i) during a first period, operation is according to one of the previous claims
ii) during a second period
a) thermal energy is produced via the thermal power plant (3) and the thermal energy is used to generate electricity
b) the electric and/or mechanical energy generated by the power plant is used to liquefy the gas (7)
c) the liquefied gas (15) is stored in a storage (S).

7. Method according to claim 6, wherein the second period corresponds to a period of lower demand for electricity and/or lower electricity price than the first period.

8. Method according to one of claims 6 and 7, wherein during the second period, the first turbine (T1) generates electricity that is used to liquefy the gas.

9. Method according to one of claims 6, 7 and 8, wherein during the first period, the gas is not liquefied.

10. Method according to one of claims 6 to 9, wherein during the first period, the stored liquid (15) is not vaporised;

11. Method according to one of claims 6 to 10, wherein during the first period, the pressurized fluid is not expanded in the second turbine (T2).

12. Integrated apparatus for generating electricity, comprising a thermal power plant comprising a first turbine (T1), which is a steam turbine, connected to means for generating electricity (G1), an apparatus for liquefying a gas and vaporising the liquefied gas (L, V) comprising a second turbine (T2), which is a turbine for expanding vaporised liquefied gas, connected to means for generating electricity (G2), , means (E) for preheating the vaporised liquefied gas (17) upstream of the second turbine **characterised in that** it comprises means for sending flue gas from the thermal power plant to the means for preheating the vaporised liquefied gas and means for transferring electric or mechanical energy from the power plant to the liquefaction apparatus.
